# EUROPÄISCHE PATENTSCHRIFT

(11) **EP 0 867 023 B1**
(45) Veröffentlichungstag und Bekanntmachung des Hinweises auf die Patenterteilung: **19.03.2003**
(21) Anmeldenummer: 96939888.2
(22) Anmeldetag: 22.11.1996
(51) Int. Cl.: G11B 7/125, G11B 7/135

(54) **GERÄT ZUM BESCHREIBEN UND/ODER LESEN OPTISCHER AUFZEICHNUNGSTRÄGER UNTERSCHIEDLICHEN AUFBAUS**
DEVICE FOR THE WRITING AND/OR READING OF OPTICAL RECORDING MEDIA OF VARIOUS STRUCTURES
APPAREIL POUR ECRIRE ET/OU LIRE DES SUPPORTS D'ENREGISTREMENT OPTIQUES DE CONSTRUCTIONS DIVERSES

(30) Priorität: 04.12.1995 DE 19544966
(43) Veröffentlichungstag der Anmeldung: 30.09.1998
(73) Patentinhaber: DEUTSCHE THOMSON-BRANDT GMBH, 78048 Villingen-Schwenningen (DE)
(72) Erfinder: DANG, Lieu, Kim, D-78056 Villingen-Schwenningen (DE)
(74) Vertreter: Thies, Stephan, Dipl.-Phys.
(86) Internationale Anmeldenummer: EP9605148
(87) Internationale Veröffentlichungsnummer: WO97021215

(56) Entgegenhaltungen:
- EP-A- 0 414 380
- EP-A- 0 537 904
- EP-A- 0 731 457
- EP-A- 0 737 964
- WO-A-96/28816
- JP-A- 5 120 720
- US-A- 5 157 555
- US-A- 5 281 797
- PATENT ABSTRACTS OF JAPAN vol. 018, no. 235 (P-1732), 28.April 1994 & JP 06 020298 A (SONY CORP), 28.Januar 1994,

## Beschreibung

Die vorliegende Erfindung befaßt sich mit einem Gerät zum Beschreiben und/oder Lesen optischer Aufzeichnungsträger unterschiedlichen Aufbaus wie beispielsweise Aufzeichnungsträger hoher Speicherdichte in Form einer Videodisk und Aufzeichnungsträger geringer Speicherdichte einer bekannten CD entsprechend.

Ein derartiges Gerät ist beispielsweise aus der DE 43 08 531 bekannt. Bei diesem bekannten Gerät wird ein Defokussiermittel in den Strahlengang eingebracht, um das auf eine Detektoreinrichtung fallende Licht bewußt zu defokussieren und eine an die Art des optischen Aufzeichunungsträgers angepaßte Abtastfleckgröße zu erzeugen. Dies setzt jedoch einen bis auf die Pitgröße übereinstimmenden Aufbau der Aufzeichnungsträger voraus.

Optische Aufzeichnungsträger, wie beispielsweise Compact Disc (CD) oder digitale Video Disc (DVD) haben jedoch unterschiedliche Substratdicken. Zum Auslesen bzw. Beschreiben sind daher unterschiedliche numerische Aperturen erforderlich, die entsprechend unterschiedliche Objektivlinsen und unterschiedliche Öffnungswinkel erfordern.

Aus der US-A-5,281,797 ist ein Gerät zum Beschreiben und/oder Lesen optischer Aufzeichnungsträger unterschiedlichen Aufbaus mittels eines durch eine Objektivlinse auf dem optischen Aufzeichnungsträger fokussierbaren Lichtstrahls bekannt, welches eine mechanische Lamellenblende bzw. ein Flüssigkristallelement als Blende variablen Durchmessers aufweist. Als nachteilig an diesem bekannten Gerät ist anzusehen, daß relativ aufwendige Bauteile verwendet werden, und daß keine Anpassung auf unterschiedliche Substratdicke der unterschiedlichen optischen Aufzeichnungsträger möglich ist; was zu einer höheren Störanfälligkeit beim Beschreiben bzw. beim Lesen führt.

Ein ähnliches Gerät, welches ein in den Strahlengang einbringbares Wellenfrontkorrekturmittel aufweist, ist aus der nicht vorveröffentlichten EP-A1-0 737 964 bekannt, die Stand der Technik gemäß Art. 54(3),(4) EPÜ für die Vertragsstaaten DE, FR und GB ist.

Aufgabe der Erfindung ist es, ein entsprechendes Gerät vorzuschlagen, das auch das Beschreiben und/oder Lesen optischer Aufzeichnungsträger unterschiedlicher Substratdicke mit nur einer Objektivlinse ermöglicht, wobei auf die Verwendung aufwendiger Bauteile verzichtet und die Störanfälligkeit beim Beschreiben bzw. Lesen reduziert ist.

Diese Aufgabe wird durch die in den unabhängigen Ansprüchen für die Vertragsstaaten DE, FR und GB bzw. die Vertragsstaaten ES und IT angegebenen Maßnahmen gelöst.

Erfindungsgemäß ist vorgesehen, daß ein Wellenfrontkorrekturmittel in den Strahlengang einbringbar ist. Dies dient zur Wellenfrontkorrektur der Objektivlinse auf eine andere Substratdicke. Die Objektivlinse ist im allgemeinen auf eine bestimmte Substratdicke korrigiert, während die Anpassung auf die andere Substratdicke über das Wellenfrontkorrekturmittel erfolgt. Gleichzeitig wird der Abstand des Fokuspunkts von der Objektivlinse vergrößert. Eine genaue Justierung des Wellenfrontkorrekturmittels im Strahlengang ist dann nicht erforderlich, wenn es mit einem kleinen Blendendurchmesser kombiniert ist.

Als Wellenfrontkorrekturmittel ist dabei vorteilhafterweise eine herkömmliche Streulinse vorgesehen. Aber auch jedes andere geeignete optische Element, welches der Wellenfrontkorrektur dient, beispielsweise ein holografisches Element, kann hier sinnvoll eingesetzt werden.

Vorzugsweise ist das Wellenfrontkorrekturmittel, insbesondere die Streulinse, mit einem weiteren optischen Element gekoppelt, beispielsweise mit einem Polarisationsmittel, der Blende oder ähnlichem. Sind das Wellenfrontkorrekturmittel und das weitere optische Element gleichzeitig in den Strahlengang zu bringende Bauteile, so können sie auf diese Weise optimal untereinander gekoppelt sein, so daß nur eine einzige Justierung für beide Bauteile erforderlich ist. Aber auch eine Kopplung des Wellenfrontkorrekturmittels mit einem Bauteil, welches nicht gleichzeitig im Strahlengang sein sollte, kann vorteilhaft sein, wobei die Kopplung dann sicherstellt, daß sich beide Bauteile nicht gleichzeitig im Strahlengang befinden.

Die Blende variablen Durchmessers kann vorteilhaft durch ein Flüssigkristallelement gebildet sein, welches beispielsweise aus einem oder mehreren ringförmigen Bereichen besteht, die auf Durchgang oder Sperrung geschaltet werden können und somit in Kombination miteinander die Größe der Blendenöffnung bestimmen.

Die Blende kann vorteilhafterweise durch einen Polarisationsfilter gebildet sein, der in Zusammenwirkung mit geeigneten Polarisationsmitteln, die die Polarisation des Lichtstrahles festlegen, als Blende wirkt. Im allgemeinen wird der Lichtstrahl durch eine Laserdiode erzeugt, die weitgehend polarisiertes Licht abgibt. Ein zusätzliches optisches Element zum Ändern der Polarisation kann in den Strahlengang eingebracht werden. Der Polarisationsfilter ist so ausgebildet, daß er für Licht unterschiedlicher Polarisation verschiedene Blendendurchmesser darstellt. Im einfachsten Fall weist der Polarisationsfilter ein kreisförmiges Loch auf, welches die Blendenöffnung in Sperrichtung bildet, während in Durchlaßrichtung die Blendenöffnung durch die Begrenzung der Objektivlinse gebildet wird.

Ist der Polarisationsfilter direkt mit der Objektivlinse gekoppelt, so bewegt sich die Blende bei Verschiebungen der Objektivlinse entlang der optischen Achse zusammen mit der Objektivlinse, wodurch die durch die Blendengröße bestimmte numerische Apertur auch bei dieser Nachführbewegung konstant bleibt. Eine derartige Nachführbewegung tritt beispielsweise auf, um den sogenannten Höhenschlag des optischen Aufzeichnungstragers ausgleichen zu können. Der Polarisationsfilter kann dabei mechanisch an die Objektivlinse gekoppelt sein oder vorteilhafterweise direkt auf dieser angebracht, z.B. aufgeklebt, sein.

Eine besonders einfache Möglichkeit, die Polarisationsrichtung linear polarisierten Lichts zu drehen, besteht darin, eine sogenannte Halbwellenplatte, auch λ/2-Platte genannt, in den Strahlengang einzubringen.

Besonders geeignet ist das erfindungsgemäße Gerät zur Verwendung mit optischen Aufzeichnungsträgern, die digital aufgezeichnete Informationen enthalten.

Vorzugsweise sind bei einem erfindungsgemäßen Gerät die Funktionen von Blende und Objektivlinse in einem Bauteil integriert, es liegt aber ebenfalls im Rahmen der Erfindung, Objektivlinse und Blende als eigenständige aber miteinander kombinierte Bauteile auszulegen. Als Blende kann dabei beispielsweise eine mechanische Blende dienen, die auf verschiedene Durchmesser einstellbar ist oder verschiedene, in den Strahlengang einbringbare Blenden unterschiedlichen Durchmessers oder auch andere geeignete Blenden. Ein Vorteil der erfindungsgemäßen Anordnung liegt darin, daß die Linse auf denjenigen optischen Aufzeichnungsträger angepaßt d.h. korrigiert ist, dessen numerische Apertur groß ist. In diesem Fall wird die Blende mit größtmöglichem Durchmesser verwendet. Für einen optischen Aufzeichnungsträger, der eine geringere numerische Apertur erfordert, wird mit einer kleineren Blendenöffnung gearbeitet. Auf diese Weise wird sowohl die numerische Apertur korrekt eingestellt, als auch die negativen Auswirkungen der auf diesen optischen Aufzeichnungsträger nicht optimal korrigierten Linse abgeschwächt. Die Störungen der Wellenfront werden durch den kleineren Blendendurchmesser verringert.

Die Objektivlinse muß auf die durch die Substratdicke des optischen Aufzeichnungsträgers hervorgerufene Störung der Wellenfront korrigiert sein, eine entsprechende numerische Apertur muß eingestellt werden. Dies ist bei dem aus dem Stand der Technik bekannten Gerät nicht der Fall. Die einzige dort verwendete Objektivlinse kann auf keine der möglichen Substratdicken optimal korrigiert sein, die Korrektur der Linse stellt notwendigerweise einen Kompromiß dar. Dies hat den Nachteil, daß die optische Detektoranordnung äußerst empfindlich auf Verkippungen des optischen Aufzeichnungsträgers sowie auf lokale Dickenänderungen in dessen durchsichtiger Schutzschicht reagiert. Zudem ist die Spotbildung auf dem Detektor nicht gleichmäßig, da die Wellenfronten gestört sind, was zu Folgefehlern führen kann.

Im Verfahrensanspruch ist ein vorteilhaftes Verfahren zur Lösung der erfindungsgemäßen Aufgabe angegeben.

Der nachfolgenden Beschreibung eines Ausfünrungsbeispiels anhand der Abbildungen können weitere vorteilhafte Ausgestaltungen der Erfindung entnommen werden.

Die Erfindung wird anhand eines Ausführungsbeispiels mit Zeichnungen näher erläutert.

Dabei zeigen:
- Fig. 1: eine Prinzipskizze eines erfindungsgemäßen Gerätes mit teilweise um 90° gekippter Darstellung und
- Fig. 2: eine Seitenansicht des in Fig. 1 gekippt dargestellten Bereichs

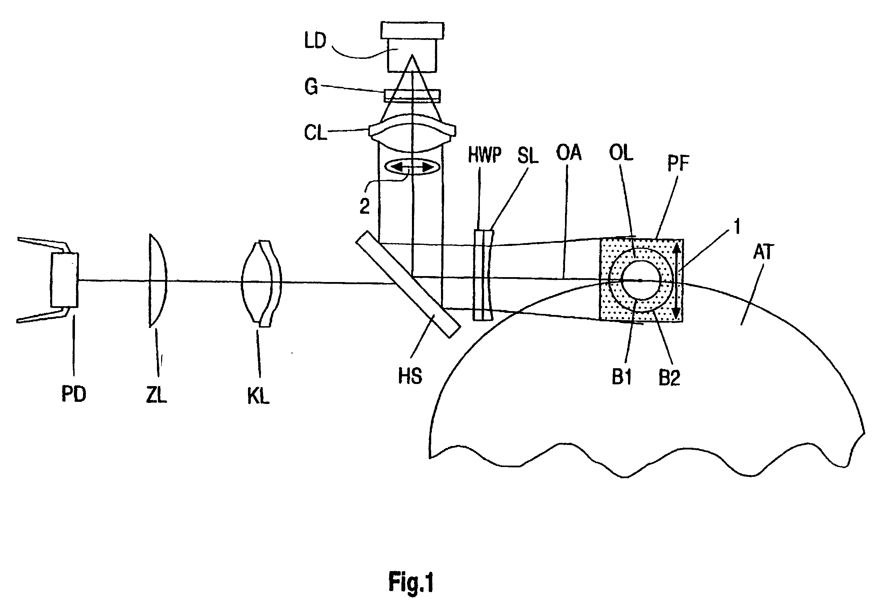

Gemäß der in Fig. 1 dargestellten Prinzipskizze eines Wiedergabe- und/oder Aufzeichnungsgerätes für optische Aufzeichnungsträger AT unterschiedlicher Speicherdichte ist in einem Wiedergabe- und/oder Aufzeichnungsgerat, das sowohl zum Abspielen bzw. Beschreiben von Audio-CDs als auch von digitalen Video-Discs vorgesehen ist, eine Abtasteinrichtung verwendet, die Fig. 1 entsprechend aus einer Laserdiode LD, einem Gitter G, einer Collimatorlinse CL, einem halbdurchlässigen Spiegel HS, einer Halbwellenlängenplatte HWP, die auch als λ/2-Platte bezeichnet wird, einer Streulinse SL, einer Objektivlinse OL, einem Polarisationsfilter PL, einer Konkavlinse KL, einer Zylinderlinse ZL und einem Detektor PD besteht. Dabei sind die Objektivlinse OL, der Polarisationsfilter PF und der Aufzeichnungsträger AT im Gegensatz zu den anderen Teilen der Abbildung in Blickrichtung der optischen Achse OA dargestellt.

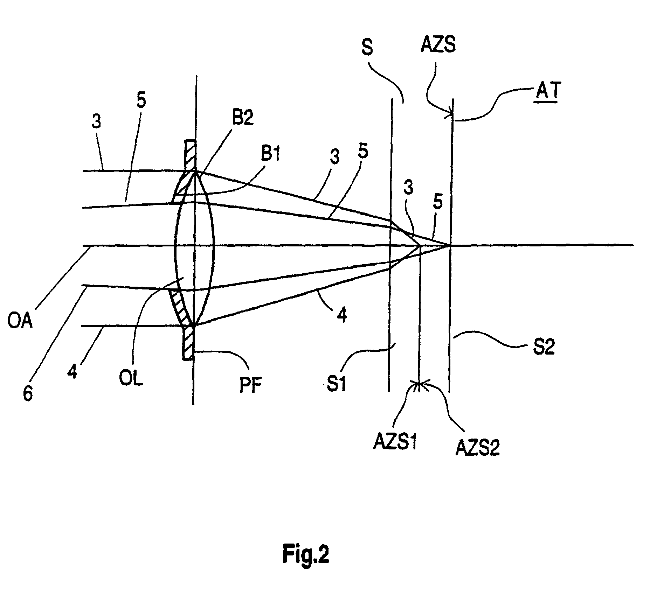

Obwohl die digitale Video-Disc, nachfolgend DVD und eine Audio-Disc, nachfolgend CD genannt, eine unterschiedliche Speicherdichte aufweisen, kann die in Fig. 1 dargestellte Abtasteinheit für beide Arten von Aufzeichnungstragern AT gleichermaßen verwendet werden. Die höhere Speicherdichte bei einer DVD wird durch eine geringere Pitgröße und einen verringerten Spurabstand im Vergleich zur CD erreicht. Gleichzeitig weist die DVD eine geringere Substratdicke im Vergleich zur CD auf, d.h. die die aufgezeichneten Informationen tragende Aufzeichnungsschicht AZS bedeckende durchsichtige Substratschicht S1 bzw. S2 ist bei der DVD dünner als die entsprechende Substratschicht S einer CD, siehe dazu auch Fig. 2. Im allgemeinen liegt die Dicke der Substratschicht S1 bzw. S2 einer DVD bei etwa 50% der Substratdicke einer CD, so daß eine DVD bei gleicher Gesamtdicke wie eine CD im Gegensatz zu dieser beidseitig beschreib- und/oder lesbar ausgebildet sein kann.

Um die auf einem Aufzeichnungsträger AT gespeicherten Informationen wiederzugeben oder entsprechende Informationen aufzuzeichnen ist es erforderlich, den Durchmesser des Abtaststrahls bzw. Schreibstrahls an die Größe der verwendeten Speicherelemente bzw. Pits sowie die Substratdicke anzupassen. Damit sowohl die kleineren Pits einer DVD als auch die größeren Pits einer CD mit der in Fig. 1 angegebenen Abtasteinrichtung gelesen werden können, ist zum einen die Objektivlinse OL mit einem Polarisationsfilter PF versehen. Zum anderen können die Halbwellenlängenplatte HWP und die Streulinse SL in den Strahlengang eingebracht bzw. aus diesem entfernt werden. Mit dieser Anordnung können unterschiedliche Lichtfleckdurchmesser auf dem Informationsträger AT realisiert werden. Die dargestellte Abtasteinrichtung wird in vorteilhafter Weise sowohl für Aufzeichnungsträger AT hoher Speicherdichte als auch geringer Speicherdichte verwendet.

Wenn mittels der in Fig. 1 angegebenen Abtasteinrichtung, die eine einzige Objektivlinse OL aufweist, Daten von Aufzeichnungstragern AT unterschiedlicher Substratdicke gelesen bzw. auf den Aufzeichnungsträger AT aufgezeichnet werden, so wird die Wellenfront durch die Substratschicht S, S1 bzw. S2 gestört, wobei die entsprechende Störung für unterschiedliche Sübstratdicken unterschiedlich ausfällt. Dies gilt auch für mehrere übereinander angeordnete, von einer Seite ausles- bzw. beschreibbare Aufzeichnungsschichten AZS einer sogenannten Multilayer Disc. Die numerische Apertur der verschiedenen Arten von Aufzeichnungsträgern AT unterscheidet sich teilweise recht stark. So liegt die numerische Apertur für eine Wellenlänge von 650 nm für eine DVD bei etwa 0,6, während sie für eine CD bei der gleichen Wellenlänge bei etwa 0,38 liegt. Es ist daher erforderlich, beim Wechsel von einem Aufzeichnungsträger AT hoher Speicherdichte zu einem Aufzeichnungsträger AT niedriger Speicherdichte die Apertur entsprechend zu ändern. Dies erfolgt erfindungsgemäß durch Anpassen des Durchmessers einer Blende variablen Durchmessers.

Im Ausführungsbeispiel ist dazu ein Polarisationsfilter PF vorgesehen, welcher direkt auf der Objektivlinse OL angeordnet ist. Er weist ein kreisförmiges Loch auf, dessen Begrenzung B1 die für CDs geeignete kleinere Blende bildet, während die äußere Begrenzung B2 der Objektivlinse OL die für DVD geeignete größere Blende bildet. Das Polarisationsfilter PF ist bevorzugt auf der dem Aufzeichnungsträger AT abgewandten Seite der Objektivlinse OL angeordnet, da dann eine im Vergleich zur aufzeichnungsträgerseitigen Anordnung größere effektive Blendenöffnung erzielt werden kann.

Die Polarisationsrichtung des Polarisationsfilters PF, die durch den Doppelpfeil 1 angedeutet ist, entspricht der Polarisationsrichtung des von der Laserdiode LD abgegebenen Lichts. Dessen Polarisationsrichtung ist durch den Doppelpfeil 2 angedeutet. Dabei ist die Polarisationsrichtung nicht auf die im Ausführungsbeispiel angegebene Richtung festgelegt.

Zum Auslesen einer DVD befinden sich weder die Halbwellenlängenplatte HWP noch die Streulinse SL im Strahlengang. Da das auf den Polarisationsfilter PF treffende Licht die gleiche Polarisationsrichtung aufweist, durchdringt es den Polarisationsfilter PF ungehindert, die effektive Blendengröße wird durch die Begrenzung B2 der Objektivlinse OL vorgegeben.

Soll eine CD gelesen werden, so werden die Halbwellenlängenplatte HWP und die Streulinse SL wie in Fig. 1 dargestellt in den Strahlengang eingebracht. Die optische Achse der Halbwellenlängenplatte HWP ist dabei um 45° bezüglich der Polarisationsrichtung des einfallenden Lichtstrahls gedreht angeordnet, so daß der die Halbwellenlängenplatte HWP verlassende Strahl eine um 90° gedrehte Polarisationsrichtung aufweist. Das so polarisierte Licht kann nur das kreisförmige Loch im Polarisationsfilter PF ungehindert durchdringen, während der zwischen den Begrenzungen B1 und B2 liegende Bereich des Polarisationsfilters PF aufgrund der um 90° gedrehten Polarisationsrichtung für das auftreffende Licht undurchlässig ist. Die effektive Blende wird somit durch die Begrenzung B1 definiert, die numerische Apertur ist entsprechend kleiner. Die Streulinse SL wird ebenfalls zum Auslesen einer CD in den Strahlengang eingebracht. Sie dient dazu, die Wellenfront des von dem Aufzeichnungsträger AT reflektierten Lichts zu korrigieren, da die Objektivlinse OL auf die Schichtdicke einer DVD als Aufzeichnungsträger AT korrigiert ist.

Die Reihenfolge von Halbwellenlängenplatte HWP und Streulinse SL im Strahlengang ist nicht auf die im Ausführungsbeispiel angegebene Reihenfolge beschränkt. Es ist sogar sinnvoll, die Streulinse SL auf der der Laserdiode LD zugewandten Seite der Halbwellenplatte anzuordnen und zwar mit der Krümmung zur Laserdiode LD hingewandt. Dies hat den Vorteil, daß geringfügige Reflektionen, die auch durch eine Vergütung nicht vollkommen eliminiert werden können, nicht parallel zum Strahlengang erfolgen und somit kein störendes Signal am Detektionsmittel PD hervorrufen.

In Fig. 2 sind die Objektivlinse OL, der Polarisationsfilter PF und der Aufzeichnungsträger AT im Vergleich zu Fig. 1 um 90° gedreht abgebildet. Der Aufzeichnungsträger AT ist dabei oberhalb der optischen Achse OA schematisch als CD und alternativ dazu unterhalb der optischen Achse OA als DVD dargestellt. Die CD weist eine einzige Aufzeichnungsschicht AZS auf, die mit einer durchsichtigen Substratschicht S der Dicke 1,2 mm bedeckt ist. Eine DVD weist dagegen zwei Aufzeichnungsschichten AZS1 und AZS2 auf, die jeweils von einer Substratschicht S1 bzw. S2 bedeckt sind und von unterschiedlichen Seiten, hier von links bzw. rechts, ausles- bzw. beschreibbar sind.

Die äußersten beiden Strahlen 3,4 deuten den Strahlengang zum Auslesen einer DVD an. Sie verlaufen links der Objektivlinse OL parallel zur optischen Achse OA, werden von der Begrenzung B2 als Blendenöffnung begrenzt und von der Objektivlinse OL auf die Aufzeichnungsschicht AZS1 fokussiert. Die beiden inneren Strahlen 5,6 deuten den Strahlengang beim Auslesen bzw. Beschreiben einer CD an und fallen von links kommend auf die Objektivlinse OL. Das einfallende Strahlenbündel ist geringfügig divergent, da es bereits die Streulinse SL durchlaufen hat, seine Polarisationsrichtung ist um 90° bezüglich derjenigen des Polarisationsfilters PF gedreht. Es kann daher den zwischen den Begrenzungen B1 und B2 liegenden Bereich des Polarisationsfilters PF nicht passieren. Das einfallende Lichtbündel wird durch die Objektivlinse OL auf die Aufzeichnungsschicht AZS der CD fokussiert.

Die zu lesenden bzw. zu beschreibenden optischen Aufzeichnungsträger AT können Höhen- bzw. Abstandsabweichungen von der Objecktivlinse OL von bis zu mehreren Millimetern aufweisen, während der jeweilige Fokuspunkt lediglich um wenige Mikrometer bezüglich der Aufzeichnungsschicht AZS bzw. AZS1 oder AZS2 des optischen Aufzeichnungsträgers AT wegbewegt werden darf um einen möglichst einwandfreien Lese- und oder Schreibvorgang zu ermöglichen. Dazu wird ein automatisches Fokussiersystem verwendet, welches den Abstand der Objektivlinse OL von der Aufzeichnungsschicht AZS bzw. AZS1 oder AZS2 mit Hilfe eines Fokusantriebs regelt. Die Signale zur Steuerung des Fokusantriebs werden von Signalen abgeleitet, die der Photodetektor PD abgibt, das heißt parallel zum Auslesen der Information.

Erfindungsgemäß wird somit ein Gerät zum Auslesen und/oder Beschreiben von Aufzeichnungsträgern AT unterschiedlichen Aufbaus vorgeschlagen, welches mit einer einzigen Objektivlinse OL arbeitet. Die Apertur wird dabei mittels eines Polarisationsfilters PF auf optischem Weg an den Typ des verwendeten optischen Aufzeichnungsträgers AT angepaßt. Eine Korrektur der Wellenfront kann durch eine zusätzlich in den Strahlengang einbringbare Streulinse SL erfolgen. Die durch den Polarisationsfilter PF gebildete Blende ist an die Objektivlinse OL gekoppelt. Daher ändert sich die durch die Blendengröße mitbestimmte Apertur bei Verschieben der Objektivlinse OL entlang der optischen Achse OA nicht.

## Patentansprüche (Patentansprüche für folgende(n) Vertragsstaat(en): DE, FR, GB)

1. Gerät zum Beschreiben und/oder Lesen optischer Aufzeichnungsträger (AT) unterschiedlichen Aufbaus mittels eines durch eine Objektivlinse (OL) auf dem optischen Aufzeichnungsträger (AT) fokussierbaren Lichtstrahls, welches eine Blende variablen Durchmessers aufweist, **dadurch gekennzeichnet, daß** das Gerät ein Wellenfrontkorrekturmittel (SL) aufweist, welches zum Lesen und/oder Beschreiben bestimmter Typen optischer Aufzeichnungsträger (AT) in den Strahlengang eingebracht wird, wobei die Blende variablen Durchmessers mit einem Flüssigkristall-Element oder einem Polarisationsfilter (PF) gebildet ist.

2. Gerät nach Anspruch 1, **dadurch gekennzeichnet, daß** das Wellenfrontkorrekturmittel eine Streulinse (SL) ist.

3. Gerät nach einem der Ansprüche 1 oder 2, **dadurch gekennzeichnet, daß** das Wellenfrontkorrekturmittel (SL) mit einem weiteren optischen Element gekoppelt ist.

4. Gerät nach Anspruch 1 für den Fall, daß die variable Blende mit einem Polarisationsfilter gebildet ist, **dadurch gekennzeichnet, daß** das Polarisationsfilter (PF) mit der Objektivlinse (OL) gekoppelt ist.

5. Gerät nach einem der vorhergehenden Ansprüche für den Fall, daß die variable Blende mit einem Polarisationsfilter gebildet ist, **dadurch gekennzeichnet, daß** zum Variieren des Durchmessers der Blende mit dem Polarisationsfilter (PF) eine Halbwellenlängenplatte (HWP) vorgesehen ist.

6. Gerät nach einem der vorhergehenden Ansprüche, **dadurch gekennzeichnet, daß** der optische Aufzeichnungsträger (AT) ein Aufzeichnungsträger (AT) zum Lesen und/oder Schreiben von Informationen in digitaler Form ist.

7. Gerät, insbesondere nach Anspruch 1, zum Beschreiben und/oder Lesen von optischen Aufzeichnungsträgern (AT) mit einem einer DVD entsprechenden Aufbau mittels eines durch eine Objektivlinse (OL) auf dem Aufzeichnungsträger (AT) fokussierbaren Lichtstrahls, bei welchem zum Beschreiben und/oder Lesen eines optischen Aufzeichnungsträgers (AT) mit einem einer CD entsprechenden Aufbau eine Objektivlinse (OL) mit variabler Blende vorgesehen ist und in dem Strahlengang zwischen einem halbdurchlässigen Spiegel (HS) und der Objektivlinse (OL) eine Halbwellenlängenplatte (HWP) und eine Streulinse (SL) vorgesehen sind.

8. Verfahren zum Beschreiben und/oder Lesen von optischen Aufzeichnungsträgern (AT) mit einem einer DVD entsprechenden Aufbau mittels eines durch eine Objektivlinse (OL) auf dem Aufzeichnungsträger (AT) fokussierbaren Lichtstrahls, bei welchem zum Beschreiben und/oder Lesen eines optischen Aufzeichnungsträgers (AT) mit einem einer CD entsprechenden Aufbau eine Objektivlinse (ÖL) mit variabler Blende vorgesehen ist und in den Strahlengang zwischen einem halbdurchlässigem Spiegel (HS) und der Objektivlinse (OL) eine Halbwellenlängenplatte (HWP) und eine Streulinse (SL) eingefügt werden.

## Patentansprüche (Patentansprüche für folgende(n) Vertragsstaat(en): ES, IT)

1. Gerät zum Beschreiben und/oder Lesen optischer Aufzeichnungsträger (AT) unterschiedlichen Aufbaus mittels eines durch eine Objektivlinse (OL) auf dem optischen Aufzeichnungsträger (AT) fokussierbaren Lichtstrahls, welches eine Blende variablen Durchmessers aufweist, **dadurch gekennzeichnet, daß** das Gerät ein Wellenfrontkorrekturmittel (SL) aufweist, welches zum Lesen und/oder Beschreiben bestimmter Typen optischer Aufzeichnungsträger (AT) in den Strahlengang eingebracht wird.

2. Gerät nach Anspruch 1, **dadurch gekennzeichnet, daß** das Wellenfrontkorrekturmittel eine Streulinse (SL) ist.

3. Gerät nach einem der Ansprüche 1 oder 2, **dadurch gekennzeichnet, daß** das Wellenfrontkorrekturmittel (SL) mit einem weiteren optischen Element gekoppelt ist.

4. Gerät nach einem der Ansprüche 1 bis 3, **dadurch gekennzeichnet, daß** die Blende variablen Durchmessers mit einem Flüssigkristall-Element gebildet ist.

5. Gerät nach einem der Ansprüche 1 bis 3, **dadurch gekennzeichnet, daß** die Blende variablen Durchmessers mit einem Polarisationsfilter (PF) gebildet ist.

6. Gerät nach Anspruch 5, **dadurch gekennzeichnet, daß** das Polarisationsfilter (PF) mit der Objektivlinse (OL) gekoppelt ist.

7. Gerät nach einem der Ansprüche 5 oder 6, **dadurch gekennzeichnet, daß** zum Variieren des Durchmessers der Blende mit dem Polarisationsfilter (PF) eine Halbwellenlängenplatte (HWP) vorgesehen ist.

8. Gerät nach einem der vorhergehenden Ansprüche, **dadurch gekennzeichnet, daß** der optische Aufzeichnungsträger (AT) ein Aufzeichnungsträger (AT) zum Lesen und/oder Schreiben von Informationen in digitaler Form ist.

9. Gerät, insbesondere nach Anspruch 1, zum Beschreiben und/oder Lesen von optischen Aufzeichnungsträgern (AT) mit einem einer DVD entsprechenden Aufbau mittels eines durch eine Objektivlinse (OL) auf dem Aufzeichnungsträger (AT) fokussierbaren Lichtstrahls, bei welchem zum Beschreiben und/oder Lesen eines optischen Aufzeichnungsträgers (AT) mit einem einer CD entsprechenden Aufbau eine Objektivlinse (OL) mit variabler Blende vorgesehen ist und in dem Strahlengang zwischen einem halbdurchlässigen Spiegel (HS) und der Objektivlinse (OL) eine Halbwellenlängenplatte (HWP) und eine Streulinse (SL) vorgesehen sind.

10. Verfahren zum Beschreiben und/oder Lesen von optischen Aufzeichnungsträgern (AT) mit einem einer DVD entsprechenden Aufbau mittels eines durch eine Objektivlinse (OL) auf dem Aufzeichnungsträger (AT) fokussierbaren Lichtstrahls, bei welchem zum Beschreiben und/oder Lesen eines optischen Aufzeichnungsträgers (AT) mit einem einer CD entsprechenden Aufbau eine Objektivlinse (OL) mit variabler Blende vorgesehen ist und in den Strahlengang zwischen einem halbdurchlässigem Spiegel (HS) und der Objektivlinse (OL) eine Halbwellenlängenplatte (HWP) und eine Streulinse (SL) eingefügt werden.

## Claims (Claims for the following Contracting State(s): DE, FR, GB)

1. Device for writing and/or reading from optical recording media (AT) having different structures by means of a light beam which can be focused onto the optical recording medium (AT) by an objective lens including a diaphragm with variable diameter,
**characterized in that**
the device contains a wave front correction means (SL) which is inserted into the beam path for reading and/or writing special types of optical recording media (AT), wherein the diaphragm with a variable diameter is formed by a liquid crystal element or a polarizing filter (PF).

2. Device according to claim 1, **characterized in that** the wave front corrections means is a diverging lens (SL).

3. Device according to claim 1 or 2, **characterized in that** the wave front correction means (SL) is coupled with a further optical element.

4. Device according to claim 1, for the case that the variable diaphragm is formed by a polarizing filter, **characterized in that** the polarizing filter (PF) is coupled with the objevtive lens (OL).

5. Device according to anyone of the preceding claims, for the case that the variable diaphragm is formed by a polarizing filter, **characterized in that** a half-wave plate (HWP) is provided for varying the diameter of the diaphragm by means of the polarizing filter (PF).

6. Device according to anyone of the preceeding claims, **characterized in that** the optical recording medium (AT) is a recording medium (AT) for reading and/or writing of informations in digital form.

7. Device, particularly according to claim 1, for writing and/or reading of optical recording media (AT) having a structure corresponding to a DVD by means of a light beam which can be focused by an objective lens (OL) on the recording medium (AT), wherein for writing an/or reading an optical recording medium (AT) having a structure corresponding to a CD and an objective lens (OL) including a variable diaphragm is provided and wherein within the beam path between a semi-transparent mirror (HS) and the objective lens (OL) a half-wave plate (HWP) and a diverging lens (SL) are provided.

8. Method for writing and/or reading from optical recording media (AT) having a structure corresponding to a DVD by means of a light beam focused on a recording medium (AT) by means of an objective lens (OL), wherein for writing and/or reading an optical recording medium (AT) with a structure corresponding to a CD an objective lens (OL) having a variable diaphragm is provided and that a half-wave plate (HWP) and a diverging lens (SL) are inserted into the beam path between the semi-transparent mirror (HS) and the objective lens (OL).

## Claims (Claims for the following Contracting State(s): ES, IT)

1. Device for writing and/or reading from optical recording media (AT) having different structures by means of a light beam which can be focused onto the optical recording medium (AT) by an objective lens, including a diaphragm with variable diameter,
**characterized in that**
the device contains a wave front correction means (SL) which is inserted into the beam path for reading and/or writing special types of optical recording media (AT).

2. Device according to claim 1, **characterized in that** the wave front corrections means is a diverging lens.

3. Device according to claim 1 or 2, **characterized in that** the wave front correction means (SL) is coupled with a further optical element.

4. Device according to anyone of claims 1 to 3, **characterized in that** the diaphragm with variable diameter is formed by a liquid crystal element.

5. Device according to anyone of claim 1 to 3, **characterized in that** the diaphragm with variable diameter is formed by means of a polarizing filter (PF).

6. Device according to claim 5, **characterized in that** the polarizing filter (PF) is coupled with the objevtive lens (OL).

7. Device according to claim 5 or 6, **characterized in that** a half-wave plate (HWP) is provided for varying the diameter of the diaphragm by means of the polarizing filter (PF).

8. Device according to anyone of the preceding claims, **characterized in that** the optical recording medium (AT) is a recording medium (AT) for reading and/or writing informations in digital form.

9. Device, particularly according to claim 1, for writing and/or reading of optical recording media (AT) having a structure corresponding to a DVD by means of a light beam which can be focused by an objective lens (OL) on the recording medium (AT), wherein for writing an/or reading an optical recording medium (AT) having a structure corresponding to a CD and an objective lens (OL) including a variable diaphragm is provided and wherein within the beam path between a semi-transparent mirror (HS) and the objective lens (OL) a half-wave plate (HWP) and a diverging lens (SL) are provided.

10. Method for writing and/or reading from optical recording media (AT) having a structure corresponding to a DVD by means of a light beam focused on a recording medium (AT) by means of an objective lens (OL), wherein for writing and/or reading an optical recording medium (AT) with a structure corresponding to a CD an objective lens (OL) having a variable diaphragm is provided and that a half-wave plate (HWP) and a diverging lens (SL) are inserted into the beam path between the semi-transparent mirror (HS) and the objective lens (OL):

## Revendications (Revendications pour l'(les) Etat(s) contractant(s) suivant(s): DE, FR, GB)

1. Appareil pour écrire et/ou lire des supports d'enregistrement optiques (AT) de constructions diverses au moyen d'un faisceau lumineux focalisable grâce à une lentille d'objectif (OL) placée sur le support d'enregistrement optique (AT), qui présente un obturateur de diamètre variable, **caractérisé en ce que** l'appareil comporte un correcteur de front d'onde (SL), qui est intégré dans le parcours optique pour lire et/ou écrire des types particuliers de supports d'enregistrement optiques (AT), où l'obturateur de diamètre variable est monté avec un élément à cristaux liquides ou un filtre polariseur (PF).

2. Appareil selon la revendication 1, **caractérisé en ce que** le correcteur de front d'onde est une lentille divergente (SL).

3. Appareil selon l'une des revendications 1 ou 2, **caractérisé en ce que** le correcteur de front d'onde (SL) est couplé à un autre élément optique.

4. Appareil selon la revendication 1, pour le cas où l'obturateur variable est monté avec un filtre polariseur, **caractérisé en ce que** le filtre polariseur (PF) est couplé à la lentille d'objectif (OL).

5. Appareil selon l'une des revendications précédentes, pour le cas où l'obturateur variable est monté avec un filtre polariseur, **caractérisé en ce qu'**une plaque demi-onde (HWP) est prévue pour la variation du diamètre de l'obturateur avec le filtre polariseur (PF).

6. Appareil selon l'une des revendications précédentes, **caractérisé en ce que** le support d'enregistrement optique (AT) est un support d'enregistrement (AT) pour lire et/ou écrire des informations sous forme numérique.

7. Appareil, spécifiquement selon la revendication 1, pour écrire et/ou lire des supports d'enregistrement optiques (AT) de construction appropriée à un DVD au moyen d'un faisceau lumineux focalisable grâce à une lentille d'objectif (OL) placée sur le support d'enregistrement optique (AT), dans lequel, pour écrire et/ou lire un support d'enregistrement optique (AT) de construction appropriée à un CD, une lentille d'objectif (OL) à obturateur variable est prévue, et une plaque demi-onde (HWP) et une lentille divergente (SL) sont prévues dans le parcours optique entre un miroir semi-transparent (HS) et la lentille d'objectif (OL).

8. Procédé pour écrire et/ou lire des supports d'enregistrement optiques (AT) de construction appropriée à un DVD au moyen d'un faisceau lumineux focalisable grâce à une lentille d'objectif (OL) placée sur le support d'enregistrement optique (AT), dans lequel, pour écrire et/ou lire un support d'enregistrement optique (AT) de construction appropriée à un CD, une lentille d'objectif (OL) à obturateur variable est prévue, et une plaque demi-onde (HWP) et une lentille divergente (SL) sont incorporées dans le parcours optique entre un miroir semi-transparent (HS) et la lentille d'objectif (OL).

## Revendications (Revendications pour l'(les) Etat(s) contractant(s) suivant(s): ES, IT)

1. Appareil pour écrire et/ou lire des supports d'enregistrement optiques (AT) de constructions diverses au moyen d'un faisceau lumineux focalisable grâce à une lentille d'objectif (OL) placée sur le support d'enregistrement optique (AT), qui présente un obturateur de diamètre variable, **caractérisé en ce que** l'appareil comporte un correcteur de front d'onde (SL), qui est intégré dans le parcours optique pour lire et/ou écrire des types particuliers de supports d'enregistrement optiques (AT).

2. Appareil selon la revendication 1, **caractérisé en ce que** le correcteur de front d'onde est une lentille divergente (SL).

3. Appareil selon l'une des revendications 1 ou 2, **caractérisé en ce que** le correcteur de front d'onde (SL) est couplé à un autre élément optique.

4. Appareil selon l'une des revendications 1 à 3, **caractérisé en ce que** l'obturateur de diamètre variable est monté avec un élément à cristaux liquides.

5. Appareil selon l'une des revendications 1 à 3, **caractérisé en ce que** l'obturateur de diamètre variable est monté avec un filtre polariseur (PF).

6. Appareil selon la revendication 5, **caractérisé en ce que** le filtre polariseur (PF) est couplé à la lentille d'objectif (OL).

7. Appareil selon l'une des revendications 5 ou 6, **caractérisé en ce qu'**une plaque demi-onde (HWP) est prévue pour la variation du diamètre de l'obturateur avec le filtre polariseur (PF).

8. Appareil selon l'une des revendications précédentes, **caractérisé en ce que** le support d'enregistrement optique (AT) est un support d'enregistrement (AT) pour lire et/ou écrire des informations sous forme numérique.

9. Appareil, spécifiquement selon la revendication 1, pour écrire et/ou lire des supports d'enregistrement optiques (AT) de construction appropriée à un DVD au moyen d'un faisceau lumineux focalisable grâce à une lentille d'objectif (OL) placée sur le support d'enregistrement optique (AT), dans lequel, pour écrire et/ou lire un support d'enregistrement optique (AT) de construction appropriée à un CD, une lentille d'objectif (OL) à obturateur variable est prévue, et une plaque demi-onde (HWP) et une lentille divergente (SL) sont prévues dans le parcours optique entre un miroir semi-transparent (HS) et la lentille d'objectif (OL).

10. Procédé pour écrire et/ou lire des supports d'enregistrement optiques (AT) de construction appropriée à un DVD au moyen d'un faisceau lumineux focalisable grâce à une lentille d'objectif (OL) placée sur le support d'enregistrement optique (AT), dans lequel, pour écrire et/ou lire un support d'enregistrement optique (AT) de construction appropriée à un CD, une lentille d'objectif (OL) à obturateur variable est prévue, et une plaque demi-onde (HWP) et une lentille divergente (SL) sont incorporées dans le parcours optique entre un miroir semi-transparent (HS) et la lentille d'objectif (OL).
